# EUROPEAN PATENT SPECIFICATION

(11) **EP 0 875 355 B1**
(45) Date of publication and mention of the grant of the patent: **04.06.2003**
(21) Application number: 97201311.4
(22) Date of filing: 01.05.1997
(51) Int. Cl.: B29C 45/27, B29C 45/32, B29C 47/58, B29C 47/70

(54) **Plug for blocking a melt passage in an injection moulding device**
Stopfen zum Blockieren des Heisskanals in einer Spritzgussmaschine
Obturateur pour bloquer le passage de coulée dans une machine à injecter

(43) Date of publication of application: 04.11.1998
(73) Proprietor: Synventive Holding B.V., 3295 KV s'Gravendeel (NL)
(72) Inventor: van Boekel, Franciscus Antonius Josef, 3311 EN Dordrecht (NL)
(74) Representative: van Westenbrugge, André

(56) References cited:
- EP-A- 0 523 549
- EP-A- 0 716 913
- JP-A- 6 328 509
- US-A- 3 945 784
- US-A- 4 609 138
- US-A- 5 366 369

## Description

The invention relates to a plug according to the preamble of claim 1.

In injection moulding devices, molten thermoplastic material is supplied to one or more nozzles through melt passages in a manifold. The melt passages in the manifold comprise horizontal and vertical channels that are formed by drilling. The passages are re-oriented by blocking these passages and by drilling a transverse channel such that it connects with the blocked channel. According to the known method a cavity is drilled in the axial direction of an existing melt passage. Subsequently an internal thread is provided on the circumferential wall of the bore in which a plug member is then screwed. The plug member comprises on its end face a blind and relatively shallow bore of a diameter corresponding with the diameter of the melt passage which is to be blocked. Thereafter a new channel is drilled into the manifold material, perpendicular or at a predetermined angle to the blocked channel. Hereby the top part of the plug member partly extends into the newly drilled transverse channel. The known construction has as a disadvantage that the depth of the bore into which the plug member is screwed needs to be determined very accurately. Furthermore, large pressures applied by the melt in an axial direction have to be taken up by the screw thread on the plug member. The known construction is also sensitive to leakage caused by inaccuracies. Because the known plug member never exactly abuts against the corner of the bore, a cavity is formed in the melt passage in which the melt can pool up, such that the chance of leakage is increased.

From EP-A-523 549 a method for providing a connection between transverse melt passage and a central melt passage in an injection molding device is known in which an insert is machined or cast to have a melt duct which extends trough the insert around a smoothly curved bend. The insert has a tapering configuration which is placed into a bore extending transversely to the melt passage. The side faces of the tapering insert sealingly engage the wall of the bore. The known insert needs to be very accurately shaped and should be accurately aligned with the melt passage to connect the duct in the insert with the melt passage.

A plug according to the preamble of claim 1 is known from EP-A-0 716 913. This document discloses how by inserting a pre-formed elbow in a cylindrical plug, the connection between a horizontal injection molding melt manifold and a vertical nozzle is made. The orientation of the plug relative to the nozzle is highly critical since the plug is pre-formed. The plug is provided with a tool engagement opening for rotating the plug to its proper orientation. For proper sealing, the pulg is brazed in a vacuum furnace, which is a relatively complex procedure.

It is an objective of the present invention to provide an improved plug member in which the above disadvantages are mitigated.

Thereto the plug according to the present invention is characterised in that the plug comprises near a second end face a tapered wall portion, the plug further comprising a sealing member having a generally cylindrical outer surface of substantially equal diameter as the blocking member and having an upper edge comprising a tapering wall portion which on one side is bounded by the cylindrical outer surface and on the other side is bounded by a slanting surface, for engaging with the tapered wall portion of the blocking member.

As the blocking member comprises a single diameter to be fitted, the blocking of the passage is simplified. By providing a relatively deep bore in the first end face of the blocking member, it is possible to drill the new, transverse channel completely below the first end face of the plug member. Hereby the problem of the formation of a cavity due to inaccurate fitting of the plug member in the lower part of the melt passage is prevented. Thereby the tolerances on length of the hole drilled in axial alignment with the melt passage to be blocked and the plug member is less critical. Hence standard tools can be used for forming this hole.

By contact of the slanting surface of the sealing member and the tapering wall portion at the lower end of the blocking member, the melt passage is effectively sealed. Preferably the sealing member is of a relatively soft material and is pressed against the blocking member by means of a separate screw member which engages with a screw thread on the lower end of the bore in which the blocking member is placed. When pressure is applied in the melt passage by presence of the melt, the blocking member will be pressed against the slanting surfaces of the sealing ring whereby the seal is further improved.

Further, by the use of the plug according to the present invention, the chamber for the blocking member and the new transverse channel can be formed in a single machining step.

US-4,609,138 discloses a method to fit plugs in the duct of a manifold. Subsequently, holes are drilled through the plugs to establish outlets. The method involves a heating step to obtain good sealing between the plugs and the walls of the manifold.

US-3,945,784 discloses an outlet channel connected to a hot runner via a plug which is solely screwed into position.

An embodiment of a plug according to the present invention will by way of example be explained in detail with reference to the accompanying drawings. In the drawings:
Figures 1a-1c show a known plug for blocking a melt passage, and
Figures 2a-2c show use of the plug according to the present invention.

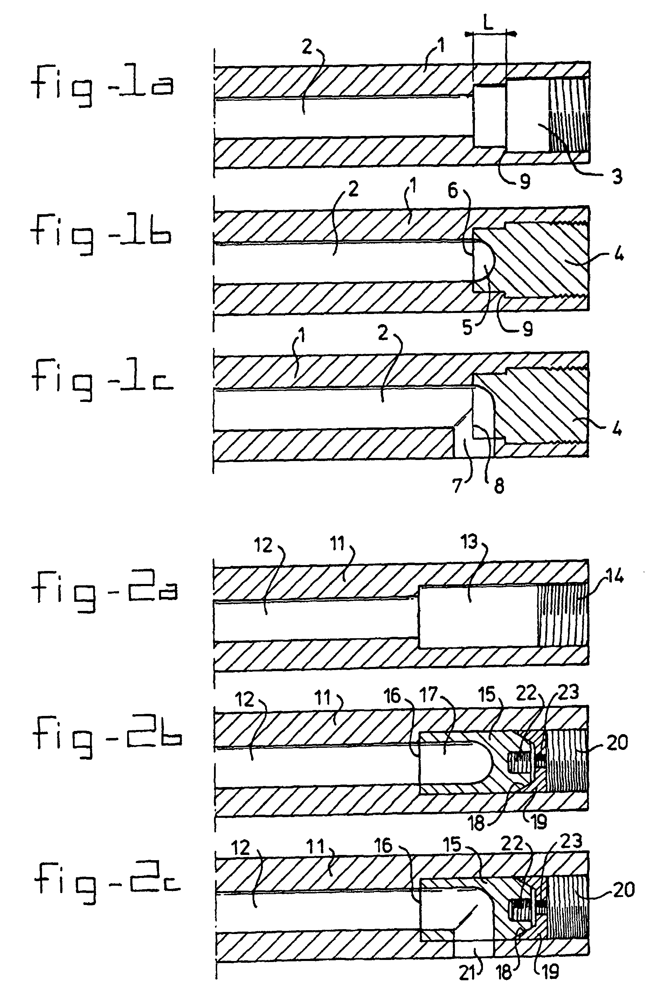

Figure 1 shows part of a known injection moulding device such a manifold 1 having a melt passage 2 leading for instance to a nozzle. In alignment with the axial direction of the melt passage 2, a stepped chamber 3 is provided with a larger diameter than the melt passage 2. As shown in figure 1b, a stepped blocking member 4, consisting of two parts, is fitted into the chamber 3 for abutting with its end face 6 against the inner end of the chamber 3. The front part of the blocking member 4 is press-fitted into the chamber 3 and is maintained in an abutting relationship by a separate screw part. A seal is formed at the end face 6 and at the stepped face 9 of the blocking member 4. When the chamber length L is too small, no effective seal is obtained at the sealing face 9. If the length L of the chamber is too large, a gap will be formed at the end face 6. Hence, the chamber length L needs to be very accurately controlled and special equipment is needed for forming the chamber 3. Alternatively, the length of the front part of the blocking member 4 needs to be adapted to the chamber length L after forming the chamber 3 in the manifold.

At the first end face 6, the blocking member 4 comprises a bore 5 which is relatively shallow, the depth of the bore 5 being smaller than the diameter of the melt passage 2.

As shown in figure 1c, a new melt passage 7 is drilled transversely to the direction of the melt passage 2. Hereby the melt passage 7 extends above the end face 6 of the blocking member 4, such that a cavity 8 can be formed in which molten material can pool up and which can increase the chances of leakage.

Figure 2 shows the use of a plug according to the present invention, in which first a chamber 13 of uniform diameter is drilled in the axial direction of the melt passage 12 in the manifold 11. The lower part of the chamber 13 is provided with an internal thread 14.

Subsequently the blocking member 15, which comprises a smooth circumferential surface, is clampingly fitted into the upper part of the chamber 13. The bore 17 in the first end face 16 has a relatively large depth compared to the diameter of the melt passage 12. The lower end of the blocking member 15 comprises a tapered wall portion 18. An inner slanting surface of the sealing member 19 engages with the tapered wall portion 18. By means of a screw member 20, the sealing member 19 is pressed against the lower part of the blocking member 15. Because of the soft material of which the sealing member 19 is formed, the sealing member deforms and effectively seals the melt passage 12 at the lower part of the blocking member 15. Suitable materials for use in the sealing member 19 are non-hardened metals which are softer than the blocking member 15 and the screw member 20.

Instead of using a separate screw member 20 it is of course possible to form the screw member 20 and the sealing member 19 from a single piece of material.

As can be seen from figure 2c, the new melt passage 21 is located completely below the first end face 16 of the blocking member 15. It is obvious that the new melt passage does not have to extend at an angle of 90° with respect to the melt passage 21 but can include any desired angle.

For removal of the blocking member 15 or the sealing member 19, these are provided with a threaded bore 22,23 respectively.

## Claims

1. Plug for forming a transverse melt passage in an injection molding device the latter comprising :
- a first melt passage,
- an axial bore (17) with a diameter larger than the diameter of the first melt passage, in the length direction of the first melt passage, at an end part thereof,
- the plug being inserted with a blocking member (15) into said axial bore, the blocking member having at an end face a blind central bore, having a diameter corresponding to the diameter of the melt passage, and the blocking member being provided with a transverse melt passage, extending transversely into the blocking member and terminating at the central bore thereof, the blocking, member comprising a constant diameter outer surface, the transverse melt passage being located below the end face of the blocking member,wherein
the depth of the axial bore (17) in the axial direction of the blocking member (15) is not smaller than the diameter of the axial bore (17), the blocking member (15) comprising a substantially smooth circumferential surface
**characterised in that,**
the plug comprises near a second end face a tapered wall portion (18), the plug further comprising a sealing member (19) having a generally cylindrical outer surface of substantially equal diameter as the blocking member (15) and having an upper edge comprising a tapering wall portion which on one side is bounded by the cylindrical outer surface and on the other side is bounded by a slanting surface, for engaging with the tapered wall portion (18) of the blocking member (15).

2. Plug according to claim 1, **characterised in that**, the outer surface of the sealing member (19) is substantially smooth, wherein the plug comprises a screw member (20) for abutting against the sealing member (19) and pressing it against the blocking (15) member.

3. Plug according to any of claims 1 to 2, **characterised in that**, the sealing member (19) is made of a relatively soft material compared to the blocking member (15) and/or the screw member (20).

4. Plug according to any of claims 1-3, **characterised in that**, the blocking member (15) is provided with a threaded bore (22) on its second end face.

5. Plug according to any of claims 1-4, **characterised in that**, the sealing member (19) comprises a threaded bore (23).

## Patentansprüche

1. Stopfen zum Ausbilden eines querverlaufenden Schmelzkanals in einer Spritzgussmaschine, mit:
- einem ersten Schmelzkanal,
- einer Axialbohrung (17) mit einem Durchmesser, der größer ist als der Durchmesser des ersten Schmelzkanals, in Längsrichtung des ersten Schmelzkanals an dessen einem Endabschnitt,
- wobei der Stopfen mit einem Blockierelement (15) in die Axialbohrung eingesetzt ist, und das Blockierelement an einer Endfläche eine zentrale Sackbohrung aufweist, deren Durchmesser dem Durchmesser des Schmelzkanals entspricht, und wobei das Blockierelement mit einem querverlaufenden Schmelzkanal versehen ist, der sich in das Blockierelement in Querrichtung bineinerstreckt und in dessen Zentralbohrung endet, wobei das Blockierelement eine Außenfläche mit konstantem Durchmesser aufweist und der querverlaufende Schmelzkanal unterhalb der Endfläche des Blockierelements angeordnet ist,
wobei die Tiefe der Axialbobrung (17) in der Axialrichtung des Blockierelements (15) nicht kleiner ist als der Durchmesser der Axialbohrung (17) und das Blockierelement (15) eine im wesentlichen glatte Umfangsfläche aufweist,
**dadurch gekennzeichnet, dass**
der Stopfen in der Nähe einer zweiten Endfläche einen konischen Wandabschnitt (18) aufweist, der Stopfen ferner ein Dichtungselement (19) mit im wesentlichen zylindrischer Außenfläche mit im wesentlichen gleichem Durchmesser wie das Blockierelement (15) sowie eine Oberkante mit einem konischen Wandabschnitt aufweist, der an einer Seite durch die zylindrische Außenfläche und an der anderen Seite durch eine geneigte Fläche begrenzt ist, zum Eingriff mit dem konischen Wandabschnitt (18) des Blockierelements (15).

2. Stopfen nach Anspruch 1, **dadurch gekennzeichnet, dass** die Außenfläche des Dichtungselements (19) im wesentlichen glatt ist, wobei der Stopfen ein Schraubenelement (20) zur Anlage an dem Dichtungselement (19) und zum Anpressen gegen das Blockierelement (15) aufweist.

3. Stopfen nach einem der Ansprüche 1 bis 2, **dadurch gekennzeichnet, dass** das Dichtungselement (19) aus einem relativ weichen Material im Vergleich zu dem Blockierelement (15) und/oder dem Schraubenelement (20) besteht.

4. Stopfen nach einem der Ansprüche 1 bis 3, **dadurch gekennzeichnet, dass** das Blockierelement (15) mit einer Gewindebohrung (22) an seiner zweiten Endfläche versehen ist.

5. Stopfen nach einem der Ansprüche 1 bis 4, **dadurch gekennzeichnet, dass** das Dichtungselement (19) eine Gewindebohrung (23) aufweist.

## Revendications

1. Obturateur destiné à former un passage de coulée transversal dans un dispositif de moulage par injection comprenant :
- un premier passage de coulée,
- un perçage axial (17) dont un diamètre est plus grand que le diamètre du premier passage de coulée, dans la direction longitudinale du premier passage de coulée, à une de ses parties d'extrémité,
- l'obturateur étant introduit avec un organe de blocage (15) dans ledit perçage axial, l'organe de blocage ayant à une face d'extrémité un perçage central borgne, son diamètre correspondant au diamètre du passage de coulée, et l'organe de blocage étant prévu avec un passage de coulée transversal s'étendant transversalement dans l'organe de blocage et se terminant à son perçage central, l'organe de blocage comprenant une surface extérieure de diamètre constant, le passage de coulée transversal étant situé au-dessous de la face d'extrémité de l'organe de blocage, dans lequel
la profondeur du perçage axial (17) dans la direction axiale de l'organe de blocage (15) n'est pas plus petite que le diamètre du perçage axial (17), l'organe de blocage (15) comprenant une surface circonférentielle essentiellement lisse,
**caractérisé en ce que**
l'obturateur comprend prés d'une deuxième face d'extrémité une partie de paroi effilée (18), l'obturateur comprenant en outre, un organe d'étanchéité (19) présentant une surface extérieure globalement cylindrique dont le diamètre est essentiellement égal à celui de l'organe de blocage (15), et présentant un bord supérieur comprenant une partie de paroi effilée qui, sur un côté, est reliée par la surface extérieure cylindrique et qui, sur l'autre côté, est reliée par une surface inclinée, destiné à venir en prise avec la partie de paroi effilée (18) de l'organe de blocage (15).

2. Obturateur selon la revendication 1, **caractérisé en ce que** la surface extérieure de l'organe d'étanchéité (19) est essentiellement lisse, dans lequel l'obturateur comprend un élément formant vis (20) destiné à venir en appui contre l'élément d'étanchéité (19) et à le comprimer contre l'organe de blocage (15).

3. Obturateur selon les revendications 1 ou 2, **caractérisé en ce que** l'organe d'étanchéité (19) est réalisé avec un matériau relativement tendre comparé à celui de l'organe de blocage (15) et/ou à celui de l'élément formant vis (20).

4. Obturateur selon l'une quelconque des revendications 1 à 3, **caractérisé en ce que** l'organe de blocage (15) est prévu avec un perçage fileté (22) sur sa deuxième face d'extrémité.

5. Obturateur selon l'une quelconque des revendications 1 à 4, **caractérisé en ce que** l'organe d'étanchéité (19) comprend un perçage fileté (23).
